# EUROPÄISCHE PATENTANMELDUNG

(11) **EP 1 211 481 A2**
(43) Veröffentlichungstag der Anmeldung: **05.06.2002**
(21) Anmeldenummer: 01128556.6
(22) Anmeldetag: 29.11.2001
(51) Int. Cl.: G01B 21/16, G01B 21/02

(54) **Prüfvorrichtung zum Erkennen der Geometrie und/oder Lage von Bauteilen**

(30) Priorität: 29.11.2000 DE 10059355; 29.11.2000 DE 10059354
(71) Anmelder: microSystems GmbH, 35578 Wetzlar (DE)
(72) Erfinder: Kammer, Hubert, 35792 Löhnberg-Obershausen (DE)
(74) Vertreter: Fleck, Hermann-Josef, Dr.-Ing.

(57) **Zusammenfassung**

Die Erfindung bezieht sich auf eine Prüfvorrichtung zum Erkennen der Geometrie und/oder Lage von Bauteilen mit einer Messwertverarbeitungseinheit (50), der von einer tragbaren Messwerterfassungseinheit (30) Messdaten des Bauteils zuführbar sind und die diese mit von ihr weiterhin über eine Empfängereinheit aufgenommenen oder in ihr in einem Speicher (61) abgelegten Bezugsdaten zum Gewinnen von Prüfdaten in Beziehung setzt und diese in eine am Körper einer Prüfperson anbringbare Sichteinheit (100) zur Kontrolle durch die Prüfperson einspielt (Fig. 1).

## Beschreibung

Die Erfindung bezieht sich auf eine Prüfvorrichtung zum Erkennen der Geometrie und/oder Lage von Bauteilen mit einer Messwertverarbeitungseinheit, einer Messwerterfassungseinheit und einer Sichteinheit.

Eine derartige Prüfvorrichtung wird (ohne vorhandenen druckschriftlichen Beleg) als bekannt angenommen. Eine meist fest montierte optische Messwerterfassungseinheit in Form einer Kamera nimmt das Bauteil bildhaft auf und überträgt Messdaten zu einer Messwertverarbeitungseinheit, wo diese weiterverarbeitet und einer Sichteinheit z.B. in Form eines Monitors zugeführt werden. Aufgrund von Bezugsdaten kann dann am Monitor eine Überprüfung der Geometrie und/ oder Lage des Bauteils relativ zu einem anderen Bauteil, beispielsweise einer Tür relativ zu einem angrenzenden Türrahmen zum Ermitteln einer einzuhaltenden Spaltbreite, überprüft und erforderlichenfalls eine Nachjustierung vorgenommen werden. Eine derartige Prüfvorrichtung ist insbesondere auch im Hinblick auf eine gegebenenfalls erforderliche Nachjustierung aufwändig.

Der Erfindung liegt die Aufgabe zugrunde, eine Prüfvorrichtung zum Erkennen der Geometrie und/oder Lage von Bauteilen bereit zu stellen, die eine flexiblere Handhabung ermöglicht.

Diese Aufgabe wird mit den Merkmalen des Anspruches 1 gelöst. Die als tragbare Einheit ausgebildete optische Messwerterfassungseinheit in Verbindung mit der am Körper der Prüfperson anzubringenden Sichteinheit ergibt eine einfach handhabbare Prüfvorrichtung, die insbesondere auch bei einem Fertigungsprozess zur Überprüfung und gewünschtenfalls auch für eine Nachjustierung günstig ist.

Dabei wird die Handhabbarkeit dadurch begünstigt, dass die Sichteinheit am Kopf der Prüfperson anlegbar und mit einem in dem Gesichtsfeld anordenbaren Sichtteil versehen ist, in das die Prüfdaten einspielbar sind und das gleichzeitig den Blick auf das Bauteil offen lässt.

Eine vorteilhafte Anordnung wird dabei dadurch erreicht, dass zum Einspielen der Prüfdaten eine Einspiegeleinheit vorgesehen ist.

Die Handhabung wird weiterhin dadurch vereinfacht, dass die Messwerterfassungseinheit als handgehaltene, frei im Raum führbare Einheit mit Lage- und Orientierungserfassungs-System ausgebildet ist.

Bei kompaktem, gut handhabbarem Aufbau wird dabei eine zuverlässige Funktionsfähigkeit dadurch unterstützt, dass das Lage- und Orientierungserfassungs-System zum Erfassen der Translation und Rotation in der Messwerterfassungseinheit eingebaute Bewegungssensoren und zum Ermitteln von bauteilbezogenen Lage- und Orientierungsdaten eine Lage- und Orientierungserfassungseinheit aufweist.

Zum Bestimmen der Lage und Orientierung der Messwerterfassungseinheit und damit der eindeutigen Erfassung der Lage und Orientierung des Bauteils und zum Erzielen eindeutiger Prüfdaten sind dabei weiterhin die Maßnahmen von Vorteil, dass das Lage- und Orientierungserfassungs-System derart ausgebildet ist, dass Beschleunigungswerte der Translation und der Rotation erfasst und zur Bestimmung von Lage und Orientierung der Messwerterfassungseinheit ausgewertet werden.

Ein einfacher, funktionssicherer Aufbau wird dabei dadurch begünstigt, dass die Messwerterfassungseinheit ein Kameramodul mit einem linienhaften oder flächenhaften Bildaufnehmer oder eine Lasermesseinheit aufweist.

Ist vorgesehen, dass die Messwertverarbeitungseinheit eine Auswerteeinheit zum Aufbereiten der Messdaten und Bezugsdaten als Prüfdaten zum Einspielen in die Sichteinheit und Kenntlichmachung von Abweichungen aufweist, so wird eine aussagekräftige Gegenüberstellung der Bezugsdaten und Messdaten erhalten und Abweichungen können problemlos und eindeutig erkannt werden.

Günstige Darbietungsformen ergeben sich dadurch, dass die Auswerteeinheit so ausgebildet ist, dass die Prüfdaten als alphanumerische Daten, Graphiken und/ oder bildhafte Daten des Bauteils aufbereitet werden.

Mit den Maßnahmen, dass die bildhaften Daten Konturlinien eines Bezugsbauteils und des geprüften Bauteils enthalten und dass die Lage- und Orientierungsdaten in die Aufbereitung zum Erzielen eindeutiger Prüfdaten einbezogen sind, können z.B. Orientierungen und Lagen der Konturlinien beispielsweise zum Überprüfen eines Spalts gegenüber einem benachbarten Bauteil schnell und zuverlässig erkannt werden.

Die Erfindung wird nachfolgend anhand von Ausführungsbeispielen unter Bezugnahme auf die Zeichnungen näher erläutert. Es zeigen:
- Fig. 1: eine schematische Darstellung einer von einer Prüfperson gehaltenen Prüfvorrichtung,
- Fig. 2: eine schematische Darstellung zur Lage- und Orientierungsänderung einer in Fig. 1 gezeigten Messwerterfassungseinheit,
- Fig. 3a und 3b: schematische Darstellungen zur Erfassung einer Lage- oder Orientierungsänderung der Messwerterfassungseinheit,
- Fig. 4: eine schematische Darstellung zu einer weiteren Erfassung von Lage- und Orientierungsänderungen der Messwerterfassungseinheit und
- Fig. 5a und 5b: eine schematische Darstellung zu einer weiteren Vorgehensweise bei der Erfassung einer Lage- oder Orientierungsänderung der Messwerterfassungseinheit.

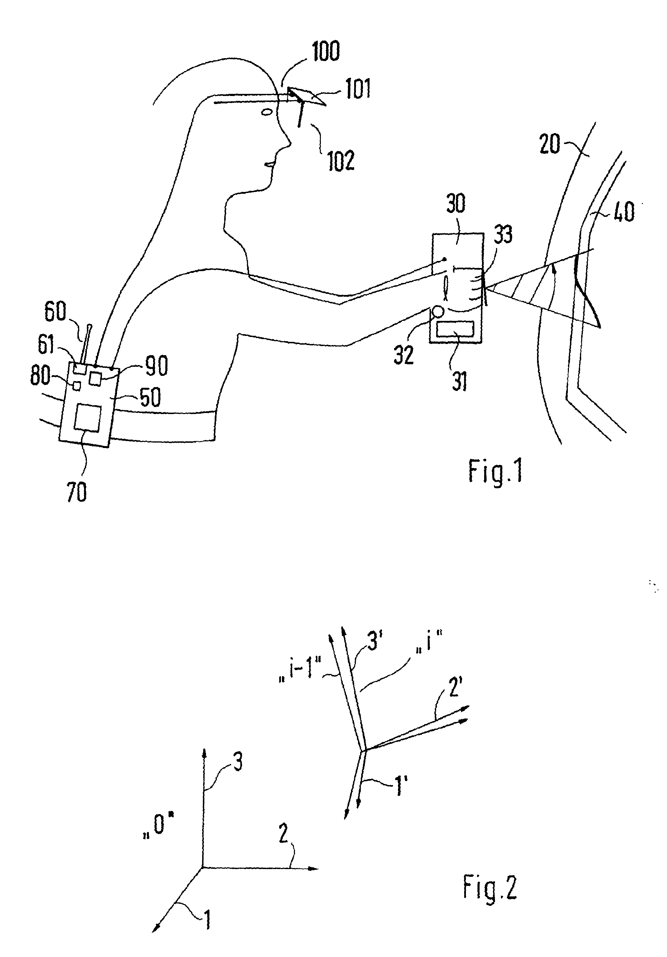

Die in Fig. 1 dargestellte Prüfvorrichtung zum Erkennen der Geometrie und/oder Lage von Bauteilen 20 oder einer Struktur 40 desselben, beispielsweise einer Autotür relativ zu einem benachbarten Rahmenteil der Karosserie, weist als wesentliche Komponenten eine auf das Bauteil 20 gerichtete optische Messwerterfassungseinheit 30, eine Messwertverarbeitungseinheit 50 sowie eine am Kopf einer Prüfperson festlegbare Sichteinheit 100 auf, die im Gesichtsfeld ein die Beobachtung des Bauteils 20 zulassendes Sichtteil 102 und eine Einspiegeleinheit 101 besitzt. Mit der Messwerterfassungseinheit 30 wird eine Struktur 40, beispielsweise ein Spalt um das Bauteil 20 oder dessen Kontur und/oder Größe erfasst.

Zur Aufbereitung der von der Messwerterfassungseinheit 30 an die Messwertverarbeitungseinheit 50 weitergeleiteten Messdaten und deren Auswertung besitzt die Messwertverarbeitungseinheit 50 eine Vergleichseinheit 80, der aus einem Speicher 70 oder über einen Netzanschluss und eine Empfängereinheit 61 von einem Netz 60 Bezugsdaten des Bauteils 20 und/oder der Struktur 40 zugeführt werden. Die Vergleichsdaten können mittels einer ebenfalls in der Messwertverarbeitungseinheit 50 vorgesehenen Auswerteeinheit 90 weiter aufbereitet werden und werden in geeigneter Form vorzugsweise als Digitaldaten der Sichteinheit 100 zum Einspielen auf das Sichtteil 102 zugeführt. Die Bezugsdaten in dem Speicher 70 können entsprechend dem Bauteil 20 und der Struktur 40 sowie der Messaufgabe vorgegeben und z.B. über eine Bauteilkennung ausgewählt werden und auch Vorgabewerte, z.B. Toleranzwerte für die Verarbeitung können in der Messwertverarbeitungseinheit 50 am Gerät selbst mittels entsprechender Eingabe- und Anzeigeelemente oder über einen externen Anschluss konfiguriert werden. Auch geeignete Auswerteprogramme und z.B. Bildverarbeitungsalgorithmen in einer Recheneinheit (Mikrocontroller oder dgl.) können vorgegeben werden. Derartige Bildverarbeitungsalgorithmen können z.B. Auswerteprogramme für die Ermittlung von Konturlinien, für eine alphanumerische Darstellung von Messwerten und/oder zur Darstellung geeigneter Graphiken enthalten, um entsprechende Prüfdaten zu erzeugen und an die Sichteinheit 100 weiterzuleiten. Bei der Verarbeitung der Daten in der Messwertverarbeitungseinheit 50 können insbesondere auch Lage- und Orientierungsdaten der Messwerterfassungseinheit 30 mit eingerechnet werden, um die tatsächlichen Istwerte des Bauteils 20 oder der zu prüfenden Struktur 40 unabhängig von Lage und Orientierung der Messwerterfassungseinheit 30 festzustellen. Dazu weist die Messwerterfassungseinheit 30 eine Lage- und Orientierungserfassungseinheit 31 der Messwerterfassungseinheit 30 auf, die mit in der Messwerterfassungseinheit 30 angeordneten Sensoren 32 zusammenarbeitet. Zum Erfassen der Lage und Orientierung des Bauteils 20 sowie der Struktur 40 ist vorliegend ein Kameramodul 33 in der Messwerterfassungseinheit 30 angeordnet. Anstelle des Kameramoduls 33, das z.B. einen flächenhaften oder einen linienhaften Bildaufnehmer umfasst, kann z.B. auch eine andere optische Messeinheit, wie z.B. eine Lasermesseinheit oder andere geeignete Messeinheit, wie etwa eine Ultraschallmesseinheit vorgesehen sein.

Zum Optimieren der Erkennung von Lage und Orientierung des Bauteils 20 oder der Struktur 40 und umgekehrt auch der Messwerterfassungseinheit 30 können auch charakteristische erfasste Merkmale des Bauteils 20 in die Auswertungen mit einbezogen werden.

Es ist auch denkbar, die Komponenten der Messwertverarbeitungseinheit in dem Gehäuse der Messwerterfassungseinheit 30 unterzubringen. Jedoch hat die getrennte Anordnung Vorteile hinsichtlich der Handhabung und der Datenübertragung und Datenverarbeitung, beispielsweise auch über das Netz 60. Auch ist es denkbar, die Bewegungserfassung sowie die Lage- und Orientierungserfassung der Messwerterfassungseinheit 30 mit Hilfe externer Sensoren beispielsweise über Triangulationsverfahren zu bestimmen, jedoch kann es dabei vorkommen, dass z.B. durch Lichtabschattung eine ungenaue Lagebestimmung erfolgt.

Mittels der in die Sichteinheit 100 eingespielten, z.B. vorteilhaft eingespiegelten Prüfdaten kann die Prüfperson z.B. Abweichungen von Istwerten gegenüber Sollwerten, etwa einen zu großen Spalt um die Autotür unmittelbar erkennen und erforderlichenfalls korrigieren. Wegen des gleichzeitigen Blicks auf das zu untersuchende Bauteil 20 und die Handhabung und Ausrichtung der Messwerterfassungseinheit 30 erkennt die Prüfperson ohne weiteres auch den Ort der Messwertaufnahme, der zusätzlich noch mit einer geeigneten optischen Markierung von der Messwerterfassungseinheit 30 aus kenntlich gemacht werden kann. Auch kann die Messwerterfassungseinheit 30 zur Beleuchtung des Messbereiches ausgebildet sein.

Werden die Bezugsdaten über das Netz 60 zur Verfügung gestellt, ist es günstig, die Schnittstelle zu der Empfängereinheit 61 als Funk- oder IR-Schnittstelle auszubilden, da dadurch die Bewegungsfreiheit der Prüfperson praktisch nicht eingeschränkt wird. Nach Abschluss der Prüf- und gegebenenfalls Justierarbeiten können die erreichten Qualitätsmerkmale in dem Speicher 70 oder über das Netz 60 protokolliert werden.

Die Sensorik 32 zur Erfassung der Lage und Orientierung der Messwerterfassungseinheit 30 kann vorteilhaft über Beschleunigungs- und evtl. Winkelgeschwindigkeitsgeber im Messwerterfassungssystem realisiert werden, wobei die Bewegungen der Messwerterfassungseinheit 30 erfasst und die zurückgelegte Bahn und auch Drehungen berechnet werden. Im Folgenden werden Verfahren zur Bestimmung der Lage und Orientierung der Messwerterfassungseinheit 30 bezüglich einer Ausgangsposition und Ausgangsorientierung unter Bezugnahme auf die Fig. 2 bis 5b angegeben, wobei Werte genutzt werden, die über die Sensoren 32 in der Messwerterfassungseinheit 30 gewonnen werden.

Zur Bestimmung der Lage und Orientierung der Messwerterfassungseinheit 30 relativ zu seiner Ausgangslage werden an mehreren Punkten des Gerätes Angaben über die momentanen translatorischen Beschleunigungs- und Geschwindigkeitsvektoren und den Ortsvektor zu einem früheren Zeitpunkt sowie über die momentanen Vektoren der Winkelbeschleunigung und der Winkelgeschwindigkeit sowie Angaben der Orientierung zu einem vorangehenden Zeitpunkt zugrunde gelegt. Durch Messungen wird für jede Geräteachse der Messwerterfassungseinheit 30 mindestens eine der Geschwindigkeits- oder Beschleunigungsangaben zur Verfügung gestellt. Diese Messungen werden in kurzem zeitlichem Abstand aufeinander gewonnen, um die Fehler der Auswertung möglichst gering zu halten. Aus den Änderungen der Messwerte wird jeweils auf die fehlende Geschwindigkeits- und/oder Beschleunigungsangabe geschlossen. Dabei wird die Erdbeschleunigung besonders beachtet, die zu erheblichen Fehlern führen könnte. Die Richtung der Erdbeschleunigung im Startzustand ist bekannt.

Aus den Winkelgeschwindigkeiten und anschließenden Berechnungen ist auch die Orientierung des Gerätes bekannt. Damit kann aus der gemessenen Gesamtbeschleunigung durch vektorielle Subtraktion der Erdbeschleunigung auf die jeweiligen linearen Beschleunigungskomponenten geschlossen werden. Aus der vorangegangenen Lage und Orientierung der Messwerterfassungseinheit 30 kann dann auf die folgende Lage und Orientierung geschlossen werden.

Der geschilderte Sachverhalt ist in Fig. 2 skizziert. Die Messwerterfassungseinheit 30 wird durch die Orientierung der Geräteachsen 1', 2' und 3' im i-ten Koordinatensystem gekennzeichnet. In der Ausgangsposition - Koordinatensystem 0 - hatten die Geräteachsen die Orientierung 1, 2 und 3. Zusätzlich ist das Koordinatensystem der Messwerterfassungseinheit 30 in der i-ten Position verschoben gegenüber dem Koordinatensystem 0. Durch die schnelle zeitliche Abfolge bei der Bestimmung der translatorischen und rotatorischen Beschleunigungs- und Geschwindigkeits-Komponenten unterscheidet sich die (i-1)-te Position und Lage nur wenig von der i-ten. Es gibt verschiedene Möglichkeiten, die notwendigen Messwerte zu erhalten, von denen nachfolgend einige angegeben werden.

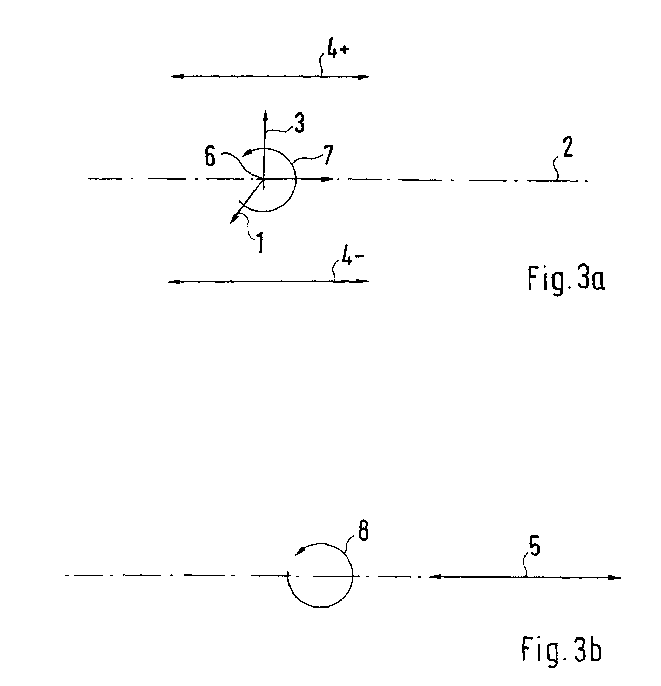

Fig. 3 zeigt eine Variante, bei der drei Messachsen definiert werden, die vorteilhafterweise senkrecht zueinander angeordnet sind. Die Wahl eines schiefwinkligen Koordinatensystems würde den notwendigen Rechenaufwand erhöhen, nicht aber das Verfahren an sich verhindern. in Richtung der Messachse 2 wird die Beschleunigung über mindestens zwei Beschleunigungssensoren 4+, 4- gemessen, die symmetrisch zur Geräteachse angeordnet sind. Zur Bestimmung der Beschleunigungs-Komponente in Richtung der Geräteachse 2 wird der Mittelwert der beiden gemessenen Beschleunigungen 4+, 4- genommen. Bildet man zusätzlich die Differenz der beiden Messwerte, so kann man die Komponente der Winkelbeschleunigung um die angedeutete Achse 1 bestimmen. Wird die Messwerterfassungseinheit 30 um einen beliebigen Punkt gedreht, so verursacht diese Drehung eine Beschleunigung, die in den Messwert der einzelnen Detektoren bzw. Sensoren eingeht. Zur Bestimmung der translatorischen Beschleunigung muss dieser Anteil am Beschleunigungssignal in der Regel kompensiert werden. Wählt man den Mittelpunkt 6 als Bezugspunkt für die Messwerterfassungseinheit 30, so ist dies besonders vorteilhaft, da bei dieser Bezugspunktwahl der gemessene Mittelwert der Beschleunigungen in Richtung der Geräteachse 2 nicht mehr um den Rotationsanteil kompensiert werden muss. Die für diesen Punkt gemessene Beschleunigung muss lediglich in das Ursprungskoordinatensystem transferiert werden. Werden in den übrigen Geräteachsen die Beschleunigungssensoren entsprechend angeordnet, so lässt sich der gesamte Beschleunigungsvektor für diesen Bezugspunkt 6 angeben. Nach Berücksichtigung der Erdbeschleunigung kann auch die laterale Beschleunigung für diesen Punkt angegeben werden. Nimmt man an, dass die Beschleunigung zwischen zwei Messwertaufnahmen konstant bleibt, so ändert sich die Geschwindigkeit proportional zum zeitlichen Abstand zwischen den Messwertaufnahmen. Durch entsprechende Berücksichtigung dieser Geschwindigkeits- und Beschleunigungsangaben wird die jeweils neue Position berechnet. Über die ermittelten Winkel lässt sich entsprechend auch die Orientierung des Sensors ermitteln.

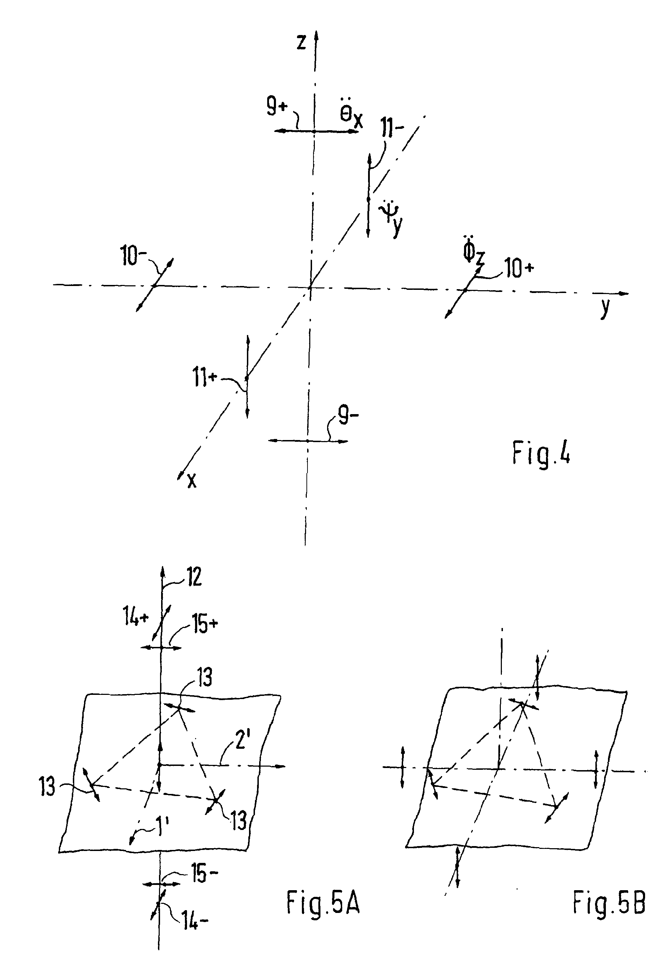

Fig. 4 zeigt, wie mit einer minimalen Anzahl von linearen Beschleunigungssensoren 9+, 9-, 10+, 10-, 11+, 11- die notwendigen translatorischen und rotatorischen Beschleunigungskomponenten gemessen werden können. Um die rotatorischen Beschleunigungen mit möglichst großer Auflösung zu messen, sollte der Abstand zwischen den Sensoren möglichst groß gehalten werden. Eine äquivalente Anordnung würde man erhalten, wenn die Sensoren jeweils um 90° bezüglich der jeweiligen Achse gedreht würden.

Wesentlich genauer lässt sich die Orientierung der Messwerterfassungseinheit 30 ermitteln, wenn über Sensoren zusätzlich noch die Winkelgeschwindigkeiten 7 gemessen werden. Ohne diese Sensoren werden die Winkelgeschwindigkeiten, wie bereits angegeben, aus den Winkelbeschleunigungen abgeleitet. Sensoren zur Messung der lateralen Geschwindigkeit, wie z.B. die optischen Korrelationssensoren, könnten grundsätzlich auch verwendet werden. Allerdings ist zumindest bislang der Einsatz dieser Sensoren für ein handgeführtes Gerät zu aufwändig.

Wie in Fig. 3b skizziert, kann man ein ähnliches Ergebnis erhalten, wenn nur ein Beschleunigungssensor 5 verwendet wird und zusätzlich die Winkelgeschwindigkeit 8 gemessen wird. Ordnet man die Sensoren in den übrigen Geräteachsen entsprechend an, so ist es nicht möglich, einen Bezugspunkt so zu wählen, dass die Beschleunigungssensoren für alle Komponenten in demselben Punkt angebracht werden. Damit müsste grundsätzlich der Einfluss der Rotation auf die gemessenen Beschleunigungskomponenten berücksichtigt werden, wenn man die laterale Bewegung des gewählten Bezugspunktes bestimmen will. Werden die Sensoren aber sehr dicht zueinander angeordnet, so ist der Fehler gering und der Einfluss der Rotation auf die gemessene Beschleunigung kann unberücksichtigt bleiben. Wie aber auch schon zuvor, muss die berechnete Beschleunigung in das Ausgangskoordinatensystem (bzw. in ein gewähltes Koordinatensystem) transferiert werden, um die Bahn verfolgen zu können.

Fig. 5a zeigt ein Beispiel, bei dem durch die Verwendung zusätzlicher Sensoren die erreichbare Positions- und Orientierungsunsicherheit noch verringert werden. In diesem Beispiel kommt einer Messebene besondere Bedeutung zu. Für diese Messebene werden zusätzliche Sensoren vorgesehen. In der Messebene werden die Komponenten der Beschleunigung über die Sensoren 13 senkrecht zur Flächennormalen 12 und die Komponente der Winkelgeschwindigkeit in Richtung der Flächennormalen 12 bestimmt. Die translatorischen Beschleunigungskomponenten in Richtung der Achsen 1' und 2' werden mit den Sensoren 14+, 14-, 15+, 15- gemessen. Die rotatorischen Beschleunigungskomponenten um die Achsen 1' und 2' werden mit den Sensoren 14+, 14-, 15+, 15- zur Differenzbildung, wie bereits beschrieben, gemessen.

Fig. 5b zeigt eine weitere Variante, die dem Beispiel nach Fig. 5a ähnlich ist. Vorteil dieser Variante ist, dass nur einachsige Beschleunigungssensoren verwendet werden und alle Sensoren in einer Ebene angeordnet sind.

Messanordnungen gemäß Fig. 5a und 5b sind dann besonders vorteilhaft, wenn das Gerät bzw. vorliegend die Messwerterfassungseinheit 30 bei der Bewegung eine Vorzugsorientierung nur unwesentlich verlässt. Vorteilhaft wird dann auch die Auflösung der Sensoren für die unterschiedlichen Orientierungen auch unterschiedlich gewählt.

Da das Verfahren die Änderung von Lage und Position bezüglich einer Ausgangslage ermittelt, ist es notwendig, beim Start des Messvorganges zunächst das System zu initialisieren. Dabei wird zu diesem Zeitpunkt die Richtung der Erdbeschleunigung relativ zur Orientierung des Gerätes bestimmt. Dies kann z.B. über externe Messkomponenten festgestellt werden. Eine andere Möglichkeit besteht darin, das Gerät in Ruhe zu halten bzw. neben der Erdbeschleunigung keine zusätzliche Beschleunigung auf das Gerät einwirken zu lassen und die Komponenten des Erdbeschleunigungsvektors und damit zum Teil auch die Orientierung des Gerätes über die inneren Sensoren zu messen. Über die Messung der Erdbeschleunigung ist die Orientierung des Gerätes nicht vollständig bestimmt. Wenn es für die Funktion des Gerätes notwendig sein sollte, muss die absolute Ausrichtung über zusätzliche Sensoren wie z.B. Kompass, Lichtschranken, Marken usw. festgestellt werden. Auch kann eine feste Ausgangslage dadurch festgelegt werden, dass das Gerät in einer festen Aufnahme in fester Positionierung abgelegt wird. Die Initialisierung kann bei Entnahme automatisch oder mittels Auslösung durch die Prüfperson erfolgen. Damit ist die Ausgangslage in der Regel ausreichend genau bekannt, um im zweiten Abschnitt des Messverfahrens relative Lage- und Orientierungsänderungen bestimmen zu können.

Es ist auch möglich, statt einachsiger mehrachsige Messwertaufnehmer zu verwenden. Die Gesamtzahl der verwendeten Komponenten kann damit verringert werden. Diese Bauteile zeigen aber eine erhöhte Querempfindlichkeit und eine geringere Empfindlichkeit und sind insofern weniger geeignet.

Das mit dem Lage- und Orientierungsmesssystem bzw. dadurch erhaltenen Bewegungsmesssystem ausgerüstete handgehaltene Gerät in Form der Messwerterfassungseinheit 30 kann an beliebigem Ort von Hand leicht entlang zu vermessender Konturen, z.B. in eine Karosserie einzupassender Autotüren oder dgl. geführt werden. Durch Einbeziehung der Bewegungsdaten in die Messdaten bei der Auswertung können Abweichungen errechnet und z.B. farbig auf der Anzeige der Sichteinheit 100 dargestellt werden. Eine Kombination mit akustischen Hinweisen, z.B. bei Toleranzüberschreitung oder einem anderen abnormalen Zustand ist möglich.

## Patentansprüche

1. Prüfvorrichtung zum Erkennen der Geometrie und/oder Lage von Bauteilen mit einer Messwertverarbeitungseinheit (50), der von einer tragbaren Messwerterfassungseinheit (30) Messdaten des Bauteils zuführbar sind und die diese mit von ihr weiterhin über eine Empfängereinheit aufgenommenen oder in ihr in einem Speicher (61) abgelegten Bezugsdaten zum Gewinnen von Prüfdaten in Beziehung setzt und diese in eine am Körper einer Prüfperson anbringbare Sichteinheit (100) zur Kontrolle durch die Prüfperson einspielt.

2. Prüfvorrichtung nach Anspruch 1,
**dadurch gekennzeichnet,**
**dass** die Sichteinheit (100) am Kopf der Prüfperson anlegbar und mit einem in dem Gesichtsfeld anordenbaren Sichtteil versehen ist, in das die Prüfdaten einspielbar sind und das gleichzeitig den Blick auf das Bauteil offen lässt.

3. Prüfvorrichtung nach Anspruch 2,
**dadurch gekennzeichnet,**
**dass** zum Einspielen der Prüfdaten eine Einspiegeleinheit (101) vorgesehen ist.

4. Prüfvorrichtung nach einem der Ansprüche 1 bis 3,
**dadurch gekennzeichnet,**
**dass** die Messwerterfassungseinheit (30) als handgehaltene, frei im Raum führbare Einheit mit Lage- und Orientierungserfassungs-System (31, 32) für die Messwerterfassungseinheit (30) ausgebildet ist.

5. Prüfvorrichtung nach Anspruch 4,
**dadurch gekennzeichnet,**
**dass** das Lage- und Orientierungserfassungs-System (31, 32) zum Erfassen der Translation und Rotation in der Messwerterfassungseinheit (30) eingebaute Bewegungssensoren (32) und zum Ermitteln von Lage- und Orientierungsdaten eine Lage- und Orientierungserfassungseinheit (31) aufweist.

6. Prüfvorrichtung nach Anspruch 4 oder 5,
**dadurch gekennzeichnet,**
**dass** das Lage- und Orientierungserfassungs-System (31, 32) derart ausgebildet ist, dass Beschleunigungswerte der Translation und der Rotation erfasst und zur Bestimmung von Lage und Orientierung der Messwerterfassungseinheit ausgewertet werden.

7. Prüfvorrichtung nach einem der vorhergehenden Ansprüche,
**dadurch gekennzeichnet,**
**dass** die Messwerterfassungseinheit (30) ein Kameramodul (33) mit einem linienhaften oder flächenhaften Bildaufnehmer oder eine Lasermesseinheit aufweist.

8. Prüfvorrichtung nach einem der vorhergehenden Ansprüche,
**dadurch gekennzeichnet,**
**dass** die Messwertverarbeitungseinheit (50) eine Auswerteeinheit (90) zum Aufbereiten der Messdaten und Bezugsdaten als Prüfdaten zum Einspielen in die Sichteinheit (100) und Kenntlichmachung von Abweichungen aufweist.

9. Prüfvorrichtung nach Anspruch 8,
**dadurch gekennzeichnet,**
**dass** die Auswerteeinheit so ausgebildet ist, dass die Prüfdaten als alphanumerische Daten, Graphiken und/oder bildhafte Daten des Bauteils aufbereitet werden.

10. Prüfvorrichtung nach Anspruch 9,
**dadurch gekennzeichnet,**
**dass** die bildhaften Daten Konturlinien eines Bezugsbauteils und des geprüften Bauteils enthalten und
**dass** die Lage- und Orientierungsdaten in die Aufbereitung zum Erzielen eindeutiger Prüfdaten einbezogen sind.
